# EUROPÄISCHE PATENTSCHRIFT

(11) **EP 3 916 899 B1**
(45) Veröffentlichungstag und Bekanntmachung des Hinweises auf die Patenterteilung: **08.01.2025**
(21) Anmeldenummer: 21172957.9
(22) Anmeldetag: 10.05.2021
(51) Int. Cl.: H01M 50/308, H01M 50/342, H01M 50/383, H01M 50/30

(54) **ENTGASUNGSEINHEIT UND ELEKTRONIKGEHÄUSE, INSBESONDERE BATTERIEGEHÄUSE**
DEGASSING UNIT AND ELECTRONICS ENCLOSURE, IN PARTICULAR BATTERY HOUSING
UNITÉ DE DÉGAZAGE ET BOITIER ÉLECTRONIQUE, EN PARTICULIER BOITIER DE BATTERIE

(30) Priorität: 26.05.2020 DE 102020113999
(43) Veröffentlichungstag der Anmeldung: 01.12.2021
(73) Patentinhaber: MANN+HUMMEL GmbH, 71636 Ludwigsburg (DE)
(72) Erfinder: KOSICKI, Jürgen, 74391 Erligheim (DE); ZBIRAL, Robert, 71672 Marbach (DE); VAUPEL, Sebastian, 73730 Esslingen (DE); ZILLER, Martin, 89558 Böhmenkirch (DE); LANGGUTH, Felix, 72669 Unterensingen (DE)
(74) Vertreter: Mann + Hummel Intellectual Property

(56) Entgegenhaltungen:
- CN-U- 208 298 910
- DE-A1- 102016 110 962
- DE-A1- 102018 114 439
- DE-A1- 102021 129 913

## Beschreibung

### Technisches Gebiet

Die Erfindung betrifft eine Entgasungseinheit nach dem Oberbegriff des Anspruchs 1 und ein eine solche Entgasungseinheit aufweisendes Elektronikgehäuse, insbesondere ein Batteriegehäuse, insbesondere einer Traktionsbatterie eines Kraftfahrzeugs.

### Stand der Technik

Gehäuse zur Aufnahme von Elektronikkomponenten wie bspw. Batteriezellen und dergleichen können nicht vollständig gasdicht gegenüber der Umgebung verschlossen werden, da einerseits aufgrund von Temperaturschwankungen (etwa durch Wärmeeinträge durch Laden bzw. Entladen von Batteriezellen) und andererseits aufgrund von natürlich vorkommenden Druckluftschwankungen, insbesondere bei mobilen Systemen, ein Gasaustausch zwischen Innen- und Außenraum ermöglicht werden muss, um unzulässige mechanische Belastungen des Gehäuses, insbesondere ein Bersten oder Ausbeulen des Gehäuses, zu verhindern. Ebenso wichtig ist es jedoch, dass das Eindringen von Fremdkörpern, Schmutz und Feuchtigkeit in Form von flüssigem Wasser wirksam verhindert wird.

Es sind daher Druckausgleichsvorrichtungen bekannt, die semipermeable Membranen aufweisen, die gasdurchlässig jedoch flüssigkeitsundurchlässig sind.

Entsteht innerhalb des Gehäuses eine Druckspitze, etwa beim Versagen einer Batteriezelle in einem Batteriegehäuse, so muss dieser Druck möglichst schnell abgebaut werden, da ansonsten das Gehäuse Schaden nehmen könnte.

Als einfachste Ausführung eines Berstschutzes ist, beispielsweise bei Bleiakkus, bekannt, Berstscheiben im Sinne einer "Sollbruchstelle", insbesondere aus einem metallischen Blechmaterial, oder Sicherheitsklappen oder Ventile zu verwenden, die in eine Gehäuseöffnung eingesetzt werden.

Bei Hochvoltbatterien, insbesondere lithiumbasierten Traktionsbatterien mit deutlich höheren Speicherkapazitäten und Leistungsdichten kommen hingegen hochspezifische Druckausgleichsvorrichtungen zum Einsatz, welche zur Erfüllung der o.g. Aufgaben optimiert sind.

Aus DE 10 2012 022 346 B4 ist eine Entgasungseinheit für ein Batteriegehäuse bekannt, die über einen Grundkörper verfügt, der eine Gasdurchtrittsöffnung aufweist, welche von einer semipermeablen Membran, die durchlässig für Gase jedoch undurchlässig für Flüssigkeiten ist, abgedeckt ist, wobei die Membran ortsfest und fluiddicht mit dem Grundkörper verbunden ist, insbesondere verschweißt. Der Grundkörper ist fluiddicht mit einer Druckausgleichsöffnung des Batteriegehäuses verbindbar. Einen Gasaustausch im Normalbetrieb stellt die Membran durch ihre semipermeablen Eigenschaften sicher, während zur Realisierung einer Notentgasungsfunktion an einem Abdeckkörper ein zu der Membran weisender Notentgasungsdorn angeordnet ist, welcher die Membran bei Überschreiten einer durch einen Gehäuseinnendruck induzierten Grenzdehnung perforiert und reißen lässt, so dass ein schlagartiger Druckausgleich vom Innenraum zur Umgebung möglich ist. An einer in einem Montagezustand zum Batteriegehäuse weisenden Innenseite ist mit dem Grundkörper ein Innenschutzgitter verbunden, welches einen Eingriff mit Fremdkörpern in das Batteriegehäuse ausschließen soll und das die Membran gegen Wasserdruck von außen abstützt. Das Innenschutzgitter ist über Heißstempelverbindungen mit dem bevorzugt aus Kunststoff bestehenden Grundkörper verbunden und weist Durchtrittsöffnungen zur Verschraubung des Grundkörpers mit dem Batteriegehäuse auf, wobei der Grundkörper zum Eingriff der zur Verschraubung verwendeten Schrauben durch metallische Gewindeeinsätze gebildete Gewinde aufweist.

Die aus dem Stand der Technik bekannten Entgasungeinheiten weisen den Nachteil auf, dass heiße (Lithium-)Partikel, welche im Falle eines Zelldefekts von einzelnen oder mehreren Batteriezellen entlassen werden, durch eine geöffnete Notentgasungsöffnung ungehindert in die Umgebung gelangen können, wobei die Gefahr besteht, dass umgebende Komponenten in Brand geraten und im schlimmsten Fall ein mit einer solchen Batterie ausgestattetes Fahrzeug abbrennt.

Aus der DE 10 2018 114 439 A1 ist eine Entgasungsvorrichtung bekannt, die eine Membrane und ein Sicherungsgitter aufweist, wobei das Sicherungsgitter keine Membranstützfunktion ausübt. Die von dem Sicherungsgitter überspannte Fläche ist dort kleiner als ein Querschnitt der von der Membran überspannten Gasdurchtrittsöffnung.

### Offenbarung der Erfindung

Aufgabe der vorliegenden Erfindung ist es daher, eine Entgasungseinheit für ein Elektronikgehäuse, insbesondere für eine Batterie, insbesondere für eine Traktionsbatterie eines Kraftfahrzeugs, zu schaffen, die sich dadurch auszeichnet, dass diese heiße Partikel im Falle eines Zelldefekts wirksam im Inneren des Elektronikgehäuses zurückhält ohne einen Druckverlust im Notentgasungspfad übermäßig zu erhöhen.

Diese Aufgabe wird durch eine Entgasungseinheit mit den Merkmalen des Anspruchs 1 sowie durch ein Elektronikgehäuse mit den Merkmalen des Anspruchs 19 gelöst.

Bevorzugte Weiterbildungen der Erfindung sind in den Unteransprüchen aufgeführt.

Vorteile der Erfindung ergeben sich aus der Beschreibung und den Zeichnungen. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Gemäß der vorliegenden Patentanmeldung wurde für die erfindungsgemäße Vorrichtung der Begriff Entgasungseinheit gewählt. Es ist jedoch selbst verständlich, dass die erfindungsgemäße Vorrichtung gleichermaßen eine Be- und Entlüftung eines Innenraums des Elektronikgehäuses durch die (poröse) Membran erlaubt und daher die erfindungsgemäße Vorrichtung auch als "Druckausgleichseinheit" oder "Be-/Entlüftungseinheit" bezeichnet werden kann.

Die hierin verwendeten relativen Bezeichnungen "innen" und "außen" beziehen sich auf einen Montagezustand bezüglich des Elektronikgehäuses, wobei "innen" zum Elektronikgehäuse weisend und "außen" zur Umgebung weisend bedeutet.

Gemäß einer ersten Ausführungsform der Entgasungseinheit für ein Elektronikgehäuse, insbesondere für eine Batterie, insbesondere für eine Traktionsbatterie eines Kraftfahrzeugs weist diese einen fluiddicht mit einem Rand einer Druckausgleichsöffnung des Elektronikgehäuses verbindbaren Grundkörper auf, der zumindest eine Gasdurchtrittsöffnung aufweist, die von einer semipermeablen Membran abgedeckt ist. Die Membran ermöglicht einen Durchtritt von gasförmigen Medien von einer Umgebung in das Elektronikgehäuse und umgekehrt, unterbindet jedoch den Durchtritt von flüssigen Medien und Feststoffen. Ferner weist die Entgasungseinheit eine an einer Innenseite des Grundkörpers angeordnete Membranstützvorrichtung auf, welche die Gasdurchtrittsöffnung zumindest teilweise übergreift und in einem ersten Abstand von der semipermeablen Membran vorliegt. Der Grundkörper weist, insbesondere an seiner Innen- und/oder Außenseite, zumindest einen Befestigungsmitteleinwirkungsbereich auf, der zu einer Befestigung der Entgasungseinheit mit dem Elektronikgehäuse eingerichtet ist. Erfindungsgemäß ist in einem zweiten Abstand von der semipermeablen Membran, der größer ist als der erste Abstand, ein Abscheidegitter mit einer Vielzahl Gitteröffnungen an einer Innenseite des Grundkörpers angeordnet, das die Gasdurchtrittsöffnung vollständig übergreift.

Die Abmessungen der Gitteröffnungen des Abscheidegitters sind so zu wählen, dass ein möglichst großer Anteil einer Partikelfraktion, welche bei einem Batteriezelldefekt entsteht, hiervon zurückgehalten werden kann, um zu verhindern, dass diese in die Umgebung gelangen. Bei den im Falle eines Zelldefekts entstehenden Partikeln handelt es sich um glühende Metall- und/oder Alkalimetallpartikel, welche zusammen mit ggf. bei einem Zelldefekt entstehenden brennbaren Gasen, eine Zündquelle darstellen können. Die Abmessungen der Gitteröffnungen des Abscheidegitters werden beispielsweise so gewählt, dass ein bestimmter Masseanteil der Partikel, etwa > 75 %, zurückgehalten werden können. Zu diesem Zweck ist das Abscheidegitters aus einem hinreichend thermisch beständigen Material gefertigt, bevorzugt liegt die Schmelztemperatur des Materials über 800 °C, insbesondere über 1000 °C. Indem erfindungsgemäß die Membranstützvorrichtung und das Abscheidegitter in unterschiedlichen Abständen von der Membran vorgesehen werden, wobei das Abscheidegitter weiter von der Membran entfernt ist, wird im Notentgasungsfall ein möglichst geringer Druckverlust sichergestellt.

Die von dem Abscheidegitter überspannte Fläche ist größer als ein Querschnitt der Gasdurchtrittsöffnung, was den Vorteil bietet, dass die zur Partikelabscheidung zur Verfügung stehende Fläche vergrößert ist. Dies trägt dazu bei, dass bei stark partikelbelasteten Gasströmen das Abscheidegitter nicht so schnell verblockt (sich zusetzt). Die aus dem Stand der Technik bekannten Vorrichtungen mit lediglich einem Stützgitter realisieren diesen Vorteil nicht, da dort der zur Partikelabscheidung zur Verfügung stehende Strömungsquerschnitt durch die Abmessungen der Gasdurchtrittsöffnung begrenzt ist.

Der erste Abstand, um welchen die Membranstützvorrichtung von der Membranoberfläche entfernt ist, kann zwischen 0,1 mm und 1,0 mm, bevorzugt zwischen 0,5 mm und 0,8 mm liegen. Der erste Abstand kann aber auch 'Null' betragen, sodass die Membran bereits im Ruhezustand an der Membranstützvorrichtung anliegt. Der zweite Abstand, um den das Abscheidegitter von der Membranoberfläche beabstandet ist, kann größer 0,5 mm, bevorzugt größer 1 mm, stärker bevorzugt größer 1,5 mm, sein.

In einer bevorzugten Ausführungsform ist auch die Membranstützvorrichtung fluiddurchlässig ausgebildet, bevorzugt als Gitterabschnitt mit einer Vielzahl Gitteröffnungen. Dies hat den technischen Vorteil, dass auch der Querschnitt der Membranstützvorrichtung, insbesondere im Notentgasungsfall, durchströmbar ist, was den Druckverlust weiter reduziert und so die Geschwindigkeit des Druckabbaus im Gehäuse erhöht.

Ferner bevorzugt ist das Abscheidegitterpartikeldicht mit dem Grundkörper verbunden ist.

Gemäß einer weiteren Ausführungsform können die Abmessungen der Gitteröffnungen des Abscheidegitters in zumindest einer Erstreckungsrichtung kleiner als 2,0 mm, bevorzugt kleiner als 1,2 mm, stärker bevorzugt kleiner als 0,9 mm, sein. Nach Erkenntnissen der Anmelder lassen sich bei einer derartigen Dimensionierung o. g. Anforderungen hinsichtlich einer gravimetrischen Abscheideleistung realisieren.

Die Membran kann an der Innenseite des Grundkörpers vorliegen und von der Stützvorrichtung zumindest teilweise hintergriffen werden, sodass diese die Membran gegen externe Druckeinwirkungen (z. B. gegen Wasserdruck im Falle von Wasserdurchfahrten und/oder Einsatz von Reinigungsvorrichtungen bei Fahrzeugen) abstützt und unzulässige Verformungen unterbindet.

Eine Anlage bzw. Verbindung der Membran mit der Innenseite des Grundkörpers hat den Vorteil, dass die Membran bei Innendruckeinwirkung quasi formschlüssig gegenüber dem Grundkörper gehalten wird und die Verbindung (Verschweißung, Verklebung o.ä.) nicht auf Zug belastet wird, was insbesondere bei Einsatz von ohnehin nur schwer fügbaren PTFE-Werkstoffen wichtig sein kann. Um auch bei Innendruckeinwirkung eine unzulässig starke Durchbiegung bzw. "Ausbeulung" der Membran, welche zu deren Zerstörung führen kann, zu verhindern kann der Grundkörper zusätzlich ein Membran-Außenschutzgitter aufweisen, welches die Membranoberfläche außen zumindest teilweise überspannt, jedoch mit einem hinreichend großen Flächenanteil fluiddurchlässig ist, um den Gasaustausch im Normalbetrieb zu ermöglichen.

Das Abscheidegitter dient ferner als Eingriffsschutz in einen Innenraum des Elektronikgehäuses, so dass Gegenstände wie beispielsweise Schraubendreher o.ä. nicht in das Innere gelangen können. Dies ist insbesondere wichtig, da Traktionsbatterien für Fahrzeuge häufig im Hochvoltbereich betrieben werden und hierdurch Gefahren drohen. Das Abscheidegitter kann eine Vielzahl an beabstandeten Gitterstegen aufweisen, deren Mindestabstand so zu wählen ist, dass ein Eingriff sicher ausgeschlossen werden kann. Die Gitterstege können in einem rechtwinkligen Raster oder als eine Kombination von umfänglich und radial verlaufenden Gitterstegen angeordnet sein.

Das Abscheidegitter kann bevorzugt ein Metall aufweisen oder daraus bestehen. Ein Abscheidegitter aus Metall hat den wichtigen Vorteil, dass auch nach einer Hochtemperatureinwirkung die Schutz- und Abscheidefunktion beibehalten wird, weshalb es gemäß der vorliegenden Erfindung bevorzugt eingesetzt wird. Alternativ kann das Abscheidegitter einen Kunststoff aufweisen oder daraus bestehen, bevorzugt Polypropylen und/oder Polybutylenterephthalat, jeweils bevorzugt Verstärkungsfasern aufweisend, insbesondere Glasfasern.

Der Grundkörper kann im Wesentlichen aus Kunststoff, insbesondere thermoplastischem Kunststoff, bestehen und insbesondere spritzgegossen sein. Bevorzugte Materialien sind Polypropylen, Polybutylenterephthalat oder Polyamid, jeweils Verstärkungsfasern aufweisend, insbesondere Glasfasern.

Für die semipermeable Membran können sämtliche Materialien eingesetzt werden, die eine Gasdurchlässigkeit zur Be-/Entlüftung im Normalbetrieb und eine hinreichend hohe Wasserundurchlässigkeit aufweisen. Als bevorzugtes Material für die semipermeable Membran kann Polytetrafluorethylen (PTFE) eingesetzt sein. Die semipermeable Membran weist eine durchschnittliche Porengröße auf, die zwischen 0,01 Mikrometer und 20 Mikrometer liegen kann. Die Porosität liegt vorzugsweise bei ca. 50 %; die mittlere Porengröße beträgt bevorzugt etwa 10 Mikrometer.

Die semipermeable Membran kann bevorzugt als folienartige bzw. folienförmige bzw. scheibenförmige, dünne Membran gestaltet sein. Die gaspermeable Membran weist eine für die Gaspermeation wirksame Membran-Oberfläche auf, die an ihrem Außenumfang bevorzugt eine rechteckige oder runde Außenkontur aufweisen kann. Es versteht sich jedoch, dass der Außenumfang der Membran auch anders gestaltet sein kann. Bei der Membran handelt es sich bevorzugt um eine dünne Flachmembran, deren für den Gasdurchtritt wirksame, voneinander weg weisenden Membran-Oberflächen im Wesentlichen parallel zu einander und vorzugsweise im Wesentlichen planar ausgebildet sind.

Die Membrandicke der Membran ist sehr viel kleiner als ihre übrigen Außenabmessungen. Die Membran kann eine Mindestbreite und/oder eine Mindestlänge oder einen Mindest-Außendurchmesser von gleich oder größer 20 mm, vorzugsweise von gleich oder größer 30 mm, insbesondere von gleich oder größer 40 mm, überspannen. Die Membrandicke kann insbesondere um mindestens das 20-fache, vorzugsweise um mindestens das 40-fache, insbesondere um mindestens das 100-fache, kleiner sein als die Mindestbreite und/oder die Mindestlänge oder der Mindest-Außendurchmesser der Membran. Die Membrandicke kann 1 Mikrometer bis 5 Millimeter betragen, wobei eine Membrandicke von 0,1 bis 2 mm, insbesondere 0,15 bis 0,5 mm, bevorzugt wird.

In einer noch weiteren Ausführungsform kann das Abscheidegitter in einer in einem Montagezustand nach innen weisenden Richtung topfförmig ausgewölbt sein. Durch die topfförmige Auswölbung wird zur Partikelabscheidung eine noch größere wirksame Oberfläche zur Verfügung gestellt, was, insbesondere im Notentgasungsfall, den Druckverlust weiter reduziert.

Alternativ kann das Abscheidegitter im Wesentlichen planar ausgebildet sein, was bei begrenztem Bauraum innerhalb des Elektronikgehäuses Vorteile bietet, da so ggf. einzuhaltende Mindestabstände zu stromführenden Bauteilen leichter eingehalten werden können.

In einer bevorzugten Weiterbildung weist die Entgasungseinheit zumindest einen Abstandshalter auf, der das Abscheidegitter in dem zweiten Abstand von der Membran hält, und der entweder nach axial innen vom Grundkörper abragend oder nach axial außen vom Abscheidegitter abragend ausgebildet ist. Wenn der Abstandshalter nach axial innen vom Grundkörper abragend ausgebildet ist, liegt das Abscheidegitter auf einem freien Ende des Abstandshalters auf, während bei einer Ausbildung des Abstandshalters nach axial außen vom Abscheidegitter abragend das freie Ende des Abstandshalters auf dem Grundkörper aufliegt. Es können insbesondere mehrere Abstandshalter vorgesehen sein, die insbesondere umfänglich verteilt angeordnet sind.

Gemäß einer besonders bevorzugten Ausführungsform sind die Abmessungen der Gitteröffnungen der Membranstützvorrichtung größer als die Abmessungen der Gitteröffnungen des Abscheidegitters. Beispielsweise können die Abmessungen der Gitteröffnungen der Membranstützvorrichtung zumindest 4-mal, bevorzugt zumindest 6-mal, größer sein als die Abmessungen der Gitteröffnungen des Abscheidegitters in der Erstreckungsrichtung mit der kleinsten Abmessung. Dem liegt der Gedanke zu Grunde, dass zur Erfüllung der Membranstützfunktion kein so engmaschiges Gitter nötig ist. Eine Schutzfunktion zur Sicherstellung eines Eingriffsschutzes (IP-Klassifizierung) wird hierbei durch die entsprechend dimensionierten Gitteröffnungen des Abscheidegitters realisiert.

Das Abscheidegitter und die Membranstützvorrichtung können separat voneinander ausgebildet sein. In einer besonderen Ausführungsform kann die Membranstützvorrichtung einteilig mit dem Grundkörper ausgebildet sein oder mit dem Grundkörper lösbar oder unlösbar verbunden sein.

Alternativ können das Abscheidegitter und die Membranstützvorrichtung auch einteilig ausgebildet sein. Insbesondere kann hierbei die Membranstützvorrichtung, insbesondere der Gitterabschnitt der Membranstützvorrichtung, als axiale Stützauswölbung des Abscheidegitters ausgebildet sein, wobei die Stützauswölbung bevorzugt zentrisch bezüglich der Gasdurchtrittsöffnung vorliegt. Die durch die Stützauswölbung bereit gestellte Membranstützvorrichtung ist der Membran näher als das Abscheidegitter an sich, wobei die Stützauswölbung in einer in einem Montagezustand nach außen weisenden Richtung ausgewölbt ist. Das Abscheidegitter mit "integrierter" Membranstützvorrichtung kann dabei besonders einfach und kostengünstig mittels Umformen und Stanzen aus einem planaren Blechabschnitt hergestellt werden.

In einer noch weiteren Ausführungsform kann das Abscheidegitter ein Filtermedium tragen, das bevorzugt ein Gittermaterial, insbesondere ein Drahtgitter, und/oder ein Vliesmaterial umfasst. Das Filtermedium weist insbesondere ein metallisches Material auf oder besteht daraus. Das Filtermedium kann hierbei durch Stützgitterstege des Abscheidegitters gestützt werden, die in Kombination mit einem Filtermedium einen deutlich grö-βeren Abstand voneinander haben können als bei einer Ausführung ohne Filtermedium; die Abstände zwischen den Stützgitterstegen können hier beispielsweise mehrere Millimeter betragen, etwa 1,5 mm bis 35 mm, bevorzugt 2 mm bis 30 mm. Die bezüglich der Abscheidung Öffnungsquerschnitte werden in diesem Fall durch die Abmessungen der Öffnungen des Gittermaterials und/oder durch die Porengrößen des Vliesmaterials bestimmt.

Ferner kann das Abscheidegitter mit dem Grundkörper unlösbar oder lösbar verbunden sein, insbesondere mit dem Grundkörper verschnappt sein. Zur Sicherstellung einer möglichst guten Partikeldichtheit der Verbindung von Abscheidegitter und Grundkörper kann das Abscheidegitter den Grundkörper radial außen zumindest teilumfänglich übergreifen. In einer bevorzugten Ausführungsform liegen im Bereich des radial äußeren Umgriffs Schnappmittel vor.

In einer besonders bevorzugten Ausführungsform kann ein Abstand zwischen dem Abscheidegitter und der Membranstützvorrichtung im Bereich des Zentrums der Gasdurchtrittsöffnung zumindest 0,2 mm, bevorzugt zumindest 0,7 mm, betragen, wobei noch grö-βere Werte im Hinblick auf einen geringen Druckverlust vorteilhafter sind.

Darüber hinaus kann der Befestigungsmitteleinwirkungsbereich des Grundkörpers eine Bohrung, insbesondere eine Sacklochbohrung, umfassen, die insbesondere zur Innen/ oder Außenseite des Grundkörpers offen ist. Mit dieser Bohrung ist, insbesondere von einem Gehäuseinneren oder Gehäuseäußeren des Elektronikgehäuses aus, ein korrespondierendes Befestigungsmittel in Eingriff bringbar.

Das Abscheidegitter ist bevorzugt als Blechteil, insbesondere als gestanztes Blechteil, ausgebildet. Dies ermöglicht auch im Großserieneinsatz eine kostengünstige Fertigung. Alternativ oder zusätzlich können die Öffnungen des Abscheidegitters auch durch andere Verfahren erzeugt werden, etwa durch (Laser-)Schneiden. Bevorzugt hat das Abscheidegitter zumindest eine Durchstecköffnung, welche mit der zumindest einen Sacklochbohrung des Grundkörpers fluchtet. Durch die Durchstecköffnung kann zur Befestigung der Entgasungseinheit am Elektronikgehäuse eine Schraube geführt werden, die gemäß dieser Ausführungsform auch das Abscheidegitter im Falle einer thermischen Einwirkung sicher bezüglich der Öffnung des Elektronikgehäuses befestigt hält.

Des Weiteren kann die Membran umlaufend mit einem Rand der Gasdurchtrittsöffnung des Grundkörpers verbunden sein, insbesondere verschweißt, bevorzugt an einer Innenseite des Grundkörpers. Alternativ kann die Membran auch verklebt sein oder kraftschlüssig gehalten, etwa geklemmt. Die hierin als bevorzugt beschriebenen porösen PTFE-Membranmaterialien lassen sich mit einem Kunststoffgrundkörper problemlos verschwei-βen oder auf andere Weise stoffschlüssig verbinden.

In einer weiteren bevorzugten Ausführungsform weist das Abscheidegitter zumindest eine Befestigungslasche mit einer Öffnung auf. Die Befestigungslasche erstreckt sich insbesondere in Radialrichtung von einem Gitterkörper des Abscheidegitters weg. Die Befestigungslasche ist dazu geeignet, das Abscheidegitter unmittelbar mit einer Wandung des Elektronikgehäuses zu verbinden. Eine unmittelbare Verbindung des insbesondere metallischen Abscheidegitters mit der insbesondere metallischen Wandung des Elektronikgehäuses hat den Vorteil, dass das Abscheidegitter nach einer starken thermischen Einwirkung (z. B. Brand und/oder Zelldefekte) sicher bezüglich der Wandung des Elektronikgehäuses befestigt bleibt und weiterhin seine Abscheidefunktion ausüben kann.

Ferner kann die Entgasungseinheit eine Abdeckhaube aufweisen, welche außenseitig mit dem Grundkörper verbunden ist, wobei die Abdeckhaube bevorzugt zumindest eine Be-/Entlüftungsöffnung aufweist.

Die Abdeckhaube stellt sicher, dass die Membran von außen weder mit Fremdkörpern, etwa spitze Gegenstände wie Schraubendreher o.ä., noch mittels Hochdruckreinigern und/oder Dampfstrahlern beschädigt werden kann und trägt so wirksam zu einer hohen IP-Schutzklasse bei.

Eine weitere, ebenfalls bevorzugte, Ausführungsform sieht vor, dass die Abdeckhaube mittels eines Rastelementeingriffs mit dem Grundkörper befestigt ist. Der Rastelementeingriff kann hierbei etwa an dem Außenumfang des Grundkörpers erfolgen oder aber im weiteren Sinne stirnseitig an dessen Außenseite. Es kommen zur Befestigung der Abdeckhaube an dem Grundkörper jedoch auch andere Befestigungsmittel in Betracht, etwa form- oder kraftschlüssige Befestigungsmittel, etwa Schrauben oder Clips, oder durch stoffschlüssige Verbindungen, insbesondere (Reib-)Schweißen.

Als Werkstoffe für den Grundkörper und/oder die Abdeckhaube kommen insbesondere Kunststoffe in Betracht, bevorzugt thermoplastische Kunststoffe, die durch Spritzgießen verarbeitbar sind. Bevorzugt besteht der Grundkörper und/oder die Abdeckhaube aus Polypropylen, Polybutylenterephthalat oder Polyamid, jeweils optional Verstärkungsfasern aufweisend, insbesondere Glasfasern, oder weist zumindest einen dieser Werkstoffe zumindest auf.

Alternativ oder zusätzlich kann die Entgasungseinheit eine Gehäusedichtung aufweisen, welche die Gasdurchtrittsöffnung des Grundkörpers an seiner Innenseite umlaufend umgibt. Die Gehäusedichtung kann als Axial- oder Radialdichtung ausgebildet sein, d.h. insbesondere an einer Stirnfläche (im Falle der Axialdichtung) oder an einer Mantelfläche (im Falle der Radialdichtung) vorliegen. Die Gehäusedichtung kann als O-Ring, welcher in einer korrespondierenden Nut des Grundkörpers aufgenommen ist, oder als angespritzte Dichtkomponente ausgebildet sein. Eine Anordnung der Gehäusedichtung in Axialkonfiguration wird bevorzugt, wobei besonders bevorzugt die Gehäusedichtung ein Bajonettverbindungsmittel welches insbesondere axial abragt, umgibt. Die Gehäusedichtung kann insbesondere auch als Formdichtung mit einem nicht-kreisförmigen, insbesondere in Längsrichtung gestreckten, Querschnitt ausgebildet sein.

Ferner kann die Entgasungseinheit einen Notentgasungsdorn aufweisen, der sich außenseitig in Axialrichtung zu der Membran erstreckt und dessen Spitze in einem Ruhezustand in einem vorbestimmten Abstand von einer äußeren Membranoberfläche vorliegt. Der Notentgasungsdorn kann hierbei entweder an dem Grundkörper oder an der Abdeckhaube ausgebildet sein. Der Notentgasungsdorn ist im Ruhezustand (keine Differenzdruckbelastung) in einem vorbestimmten Abstand zur Membranoberfläche angeordnet. Unter Druckbelastung (relativer Innenüberdruck) wird sich die Membrane in Richtung Außenraum ausbeulen und bei Erreichen eines Grenzdrucks auf Anlage an der Spitze des Notentgasungsdorns kommen. Aufgrund seiner Spitze erzeugt der Notentgasungsdorn dann eine gezielte Schwächung der Membran, so dass diese reißt. Dies dient der Sicherstellung einer möglichst flink reagierenden Notentgasungsfunktion, was wichtig ist, um bei einem plötzlichen Innendruckanstieg in dem Elektronikgehäuse sicherstellen zu können, dass die Gehäusestruktur intakt bleibt. Durch eine Variation des Abstandes der Spitze des Notentgasungsdorns von der Membranoberfläche ist der Notentgasungsdruck einstellbar.

Ein weiterer Aspekt der Erfindung betrifft ein Elektronikgehäuse, insbesondere ein Batteriegehäuse, insbesondere einer Traktionsbatterie eines Kraftfahrzeugs. Als weitere Einsatzmöglichkeiten der erfindungsgemäßen Entgasungseinheit neben Traktionsbatterien ergeben sich etwa Schaltschränke oder Transformatorengehäuse. Das Elektronikgehäuse hat zumindest eine Gehäusewandung mit einer Druckausgleichsöffnung, wobei in dem Elektronikgehäuse bevorzugt Batteriezellen anordenbar sind und wobei die Druckausgleichsöffnung von einer erfindungsgemäßen Entgasungseinheit verschlossen ist, so dass ein Gasaustausch zwischen einem Innenraum des Elektronikgehäuse und der Umgebung möglich ist, jedoch das Eindringen von Feuchtigkeit, Schmutz und Fremdkörpern wirksam verhindert ist.

Insbesondere ist dabei eine Montage der Entgasungseinheit derart vorgesehen, dass diese mittels zumindest eines Befestigungsmittels, insbesondere einer Schraube, mit einer Wandung des Elektronikgehäuses verbunden ist, wobei das Befestigungsmittel mit dem Befestigungsmitteleinwirkungsbereich des Grundkörpers in Eingriff steht. Durch die Verschraubung werden die zur Verpressung der Gehäusedichtung nötigen Dichtungsvorspannkräfte erzeugt. Die Verschraubung kann insbesondere von einem Innenraum des Elektronikgehäuses her erfolgen. Es sind selbstverständlich auch Ausführungsformen von der Erfindung umfasst, bei denen die Verschraubung der Entgasungseinheit mit dem Elektronikgehäuse von der Außenseite her erfolgt.

Besonders bevorzugt ist das Abscheidegitter mittelbar oder unmittelbar formschlüssig zwischen der Wandung des Elektronikgehäuses und dem Grundkörper der Entgasungseinheit festgelegt, quasi sandwichartig dazwischen eingeklemmt. Hierdurch wird ermöglicht, dass auch das Abscheidegitter im Falle einer thermischen Einwirkung sicher bezüglich der Öffnung des Elektronikgehäuses befestigt bleibt.

Gemäß einer bevorzugten Ausführungsform kann das Abscheidegitter unmittelbar mit einer Wandung des Elektronikgehäuses verbunden sein, insbesondere durch zumindest ein metallisches Befestigungselement, insbesondere durch zumindest eine Schraube. Bevorzugt ist die Schraube durch die Öffnung der zumindest einen Befestigungslasche des Abscheidegitters geführt. Eine insbesondere metallische Direktverbindung des Abscheidegitters mit der Wandung des Elektronikgehäuses hat die im vorhergehenden Absatz beschriebenen Vorteile.

Schließlich kann die Gehäusewandung an einer Außenseite eine die Druckausgleichsöffnung umlaufende Dichtfläche aufweisen, an der in einem Montagezustand die Gehäusedichtung der Entgasungseinheit anliegt. Die Dichtfläche ist bevorzugt als ein Bereich der Wandung des Elektronikgehäuses mit möglichst geringen Abweichungen hinsichtlich Ebenheit und geringer Rauheit ausgebildet. Geeigneter Weise weist das Elektronikgehäuse bzw. zumindest dessen Wandung einen Metallwerkstoff auf oder besteht daraus, so dass die Dichtfläche hinsichtlich der o. g. Eigenschaften einfach durch mechanische Bearbeitung erhalten werden kann.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine isometrische Schnittansicht einer erfindungsgemäßen Entgasungseinheit gemäß einer ersten Ausführungsform;
- Fig. 2: eine weitere isometrische Schnittansicht der erfindungsgemäßen Entgasungseinheit gemäß der ersten Ausführungsform;
- Fig. 3: eine isometrische Ansicht einer erfindungsgemäßen Entgasungseinheit gemäß einer zweiten Ausführungsform;
- Fig. 4: eine isometrische Schnittansicht der erfindungsgemäßen Entgasungseinheit gemäß der zweiten Ausführungsform;
- Fig. 5: eine weitere isometrische Ansicht der erfindungsgemäßen Entgasungseinheit gemäß der zweiten Ausführungsform von außen;
- Fig. 6: eine isometrische Ansicht einer erfindungsgemäßen Entgasungseinheit gemäß einer dritten Ausführungsform;
- Fig. 7: eine isometrische Schnittansicht der erfindungsgemäßen Entgasungseinheit gemäß der dritten Ausführungsform;
- Fig. 8: Detail A aus Fig. 7;
- Fig. 9: eine isometrische Ansicht einer erfindungsgemäßen Entgasungseinheit gemäß einer vierten Ausführungsform;
- Fig. 10: eine isometrische Schnittansicht einer erfindungsgemäßen Entgasungseinheit gemäß einer vierten Ausführungsform;
- Fig. 11: eine isometrische Schnittansicht einer erfindungsgemäßen Entgasungseinheit gemäß einer fünften Ausführungsform.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen. Merkmale oder Merkmalskombinationen, welche in Zusammenhang mit einer bestimmten Ausführungsform offenbart sind, sind - wenn nicht explizit ausgeschlossen - auch auf die anderen Ausführungsformen übertragbar.

Alle Abbildungen zeigen die erfindungsgemäße Entgasungseinheit 10 in einem eingebauten Zustand mit einem Abschnitt einer Wandung 4 eines Elektronikgehäuses, insbesondere für eine Batterie, insbesondere für eine Traktionsbatterie eines Kraftfahrzeugs.

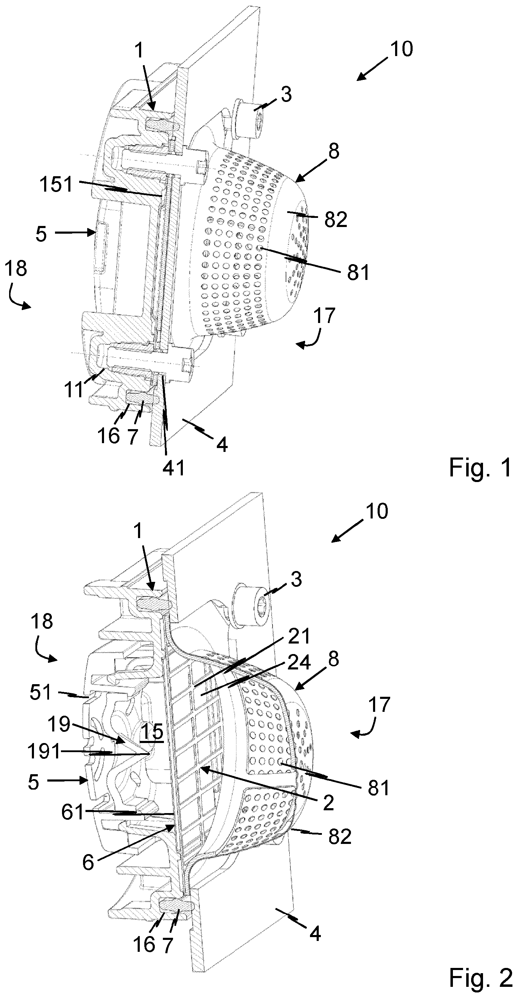

In den **Fig. 1 und Fig. 2** ist eine erste Ausführungsform der erfindungsgemäßen Entgasungseinheit 10 in einer isometrischen Schnittdarstellung gezeigt. Diese verfügt über einen Grundkörper 1, der über eine Schraubverbindung außenseitig mit einem Rand einer Druckausgleichsöffnung eines Elektronikgehäuses, insbesondere eines Batteriegehäuses einer Traktionsbatterie, verbunden ist. Die Schraubverbindung weist mehrere Schrauben 3 sowie entsprechende Befestigungsmitteleinwirkungsbereiche 11 des Grundkörpers auf, in welche die Schrauben eingedreht sind. Die Schrauben 3 erstrecken sich jeweils durch Durchgangsbohrungen 41 der Wandung 4 des Elektronikgehäuses. Die Entgasungseinheit 10 ist außenseitig am Elektronikgehäuse montiert und wird von der Innenseite her verschraubt. Zur fluiddichten Abdichtung des Grundkörpers 1 der Entgasungseinheit 10 mit der Wandung 4 des Elektronikgehäuses ist die Gehäusedichtung 7 vorgesehen, welche durch die durch die Schrauben 3 aufgebrachte Dichtungsvorspankraft verpresst wird. Die Gehäusedichtung 7 ist in einer Dichtungsaufnahmenut 16 des Grundkörpers 1 angeordnet und wird darin durch einen "bauchigen" Querschnittsbereich gehalten, so dass sie bei der Montage nicht heraus fällt.

Der Grundkörper hat zudem eine Gasdurchtrittsöffnung 15, durch die ein Druckausgleich zwischen Gehäuseinnenraum und der Umgebung sowie umgekehrt stattfinden kann.

Weiter verfügt die Entgasungseinheit 10 über eine semipermeable Membran 6, welche für gasförmige Fluide durchlässig ist, den Durchtritt von Festkörpern und Flüssigkeiten jedoch unterbindet. Bevorzugt ist die Membran als poröse PTFE-Folie ausgebildet. Die semipermeable Membran 6 ist auf der Innenseite 17 um die Gasdurchtrittsöffnung 15 des Grundkörpers 1 herum fluiddicht mit dem Grundkörper 1 verbunden, bevorzugt verschweißt oder verklebt, nämlich mit dem Rand 151.

Die Gasdurchtrittsöffnung 15 bzw. die Membran 6 ist weiter von einer fluiddurchlässigen Membranstützvorrichtung 2 abgedeckt, welche in einem ersten Abstand von der Membran 6 vorliegt. Die Membranstützvorrichtung 2 hat eine Vielzahl Gitterstege 21, zwischen denen eine Vielzahl Gitteröffnungen 24 vorliegt. Die Membranstützvorrichtung 2 ist im vorliegenden Ausführungsbeispiel als gestanztes Blechteil ausgebildet.

Auf seiner Außenseite 18 ist mit dem Grundkörper 1 eine Abdeckhaube 5 verbunden, die zumindest eine Be-/Entlüftungsöffnung 51 aufweist und dazu eingerichtet ist, einen Schutz für die empfindliche Membran 6 bereit zu stellen, so dass diese von außen weder mit Fremdkörpern, etwa spitze Gegenstände wie Schraubendreher o.ä., noch mittels Hochdruckreinigern und/oder Dampfstrahlern beschädigt werden kann. Konstruktion und Dimensionierung der Abdeckhaube tragen somit wesentlich zu einer hohen IP-Schutzklasse bei.

Ferner weist die Entgasungseinheit 10 ein Abscheidegitter 8 auf, das eine Vielzahl Öffnungen 81 aufweist. Das Abscheidegitter 8 liegt in einem zeiten Abstand von der Membran 6 vor, der größer ist als der erste Abstand, in welchem die Membranstützvorrichtung 2 vorliegt. Die Öffnungen 81 des Abscheidegitters 8 sind zudem kleiner als die Öffnugnen 24 der Membranstützvorrichtung 2 und stellen einen Eingriffschutz bereit, sodass nicht lange und spitze Gegenstände (etwa Drähte, Schraubendreher o. ä.) in das Gehäuseinnere eingeführt werden können. Das Abscheidegitter 8 ist als ausgewölbter Topf 82 ausgebildet der sich in einer nach innen gerichteten Richtung auswölbt. Über das Abscheidegitter 8 können Partikel, welche im Falle eines Zelldefekts aus einzelnen oder mehreeren Batteriezellen entlassen werden, im Gehäuseinneren zurückgehalten werden. Die Abmessungen der Gitteröffnungen 81 des Abscheidegitters 8 sind so zu wählen, dass ein möglichst großer Anteil einer Partikelfraktion hiervon zurückgehalten werden kann, um zu verhindern, dass diese in die Umgebung gelangen. Die Abmessungen der Gitteröffnungen 81 des Abscheidegitters werden beispielsweise so gewählt, dass ein bestimmter Masseanteil der Partikel, etwa > 75 %, zurückgehalten werden können. Die Topfform des Abscheidegitters 8 vergrößert die zur Partikelabscheidung zur Verfügung stehende Oberfläche gegenüber einer planaren Ausführung und reduziert daher die Neigung des Abscheidegitters 8 bei stark partikelbeladenen Gasströmungen zu verblocken. Eine vergrößerte Oberfläche des Abscheidegitters 8 hat ferner den Vorteil, dass thermische Peaks über eine größere Fläche verteilt werden, was das Risiko thermisch bedingter struktureller Beschädigungen reduziert.

Das Abscheidegitter 8 ist mit dem Grundkörper partikeldicht verbunden, gemäß der gezeigten Ausführungsform, indem es sandwichartig zwischen der Wandung 4 des Elektronikgehäuses und dem Grundkörper 1 verklemmt wird. Zur Erleichterung der Montage des Entgasungseinheit 10 kann das Abscheidegitter 8 zusätzlich bezüglich des Grundkörpers 1 zumindest vorfixiert sein; hierzu kommen alle dem Fachmann geeignet erscheinenden Verbindungsarten (etwa kleben) in Frage.

Der Grundkörper 1 weist ferner einen Notentgasungsdorn 19 auf. Dieser erstreckt sich zur Membran 6 hin und ist im Ruhezustand (keine Differenzdruckbelastung) in einem vorbestimmten Abstand zur äußeren Membranoberfläche 61 angeordnet. Unter Druckbelastung (relativer Innenüberdruck) wird sich die Membrane 6 in Richtung Außenraum ausbeulen und bei Erreichen eines Grenzdrucks auf Anlage an der Spitze 191 des Notentgasungsdorns 19 kommen. Aufgrund seiner Spitze 191 erzeugt der Notentgasungsdorn 19 dann eine gezielte Schwächung der Membran 6, so dass diese reißt. Dies dient der Sicherstellung einer möglichst flink reagierenden Notentgasungsfunktion, was wichtig ist, um bei einem plötzlichen Innendruckanstieg in dem Elektronikgehäuse sicherstellen zu können, dass die Gehäusestruktur intakt bleibt. Durch eine Variation des Abstandes der Spitze 191 des Notentgasungsdorns 19 von der Membranoberfläche 61 ist der Notentgasungsdruck einstellbar.

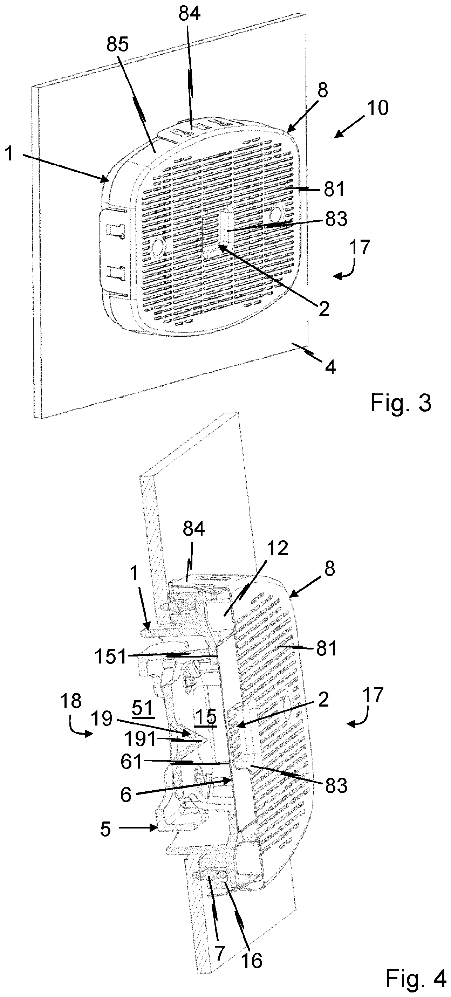

Gemäß der in den **Fig. 3** bis **Fig. 5** dargestellten zweiten Ausführungsform ist die Membranstützvorrichtung 2 einteilig mit dem Abscheidegitter 8 ausgebildet. Die Entgasungseinheit 10 ist innenseitig an der Wandung 4 des Elektronikgehäuses angeordnet und wird von außen verschraubt.

Das Abscheidegitter 8 weist einen Umgriffsbereich 85 auf, welcher den Grundkörper 1 radial außen umlaufend umgreift. In dem Umgriffsbereich 85 erfolgt die lösbare Befestigung des Abscheidegitters 8 mit dem Grundkörper 1 durch Schnappmittel 84 des Abscheidegitters 8, welche in jeweils korrespondierende Schnappausnehmungen des Grundkörpers 1 eingeschnappt sind. Der derartig umlaufende Umgriff des Abscheidegitters 8 erhöht einerseits die Steifigkeit des Abscheidegitters 8 und trägt andererseits zu einer verbesserten Partikeldichtheit bei. Die Membranstützvorrichtung 2 ist gemäß dieser Ausführungsform als axiale Auswölbung 83 bzw. Vertiefung des Abscheidegitters 8 ausgebildet. Die Membranstützvorrichtung 2 wird durch einen axial versetzten fluiddurchlässigen Gitterabschnitt des Abscheidegitters 8 bereit gestellt, der in etwa zentrisch zur Gasdurchtrittsöffnung 15 angeordnet ist und in einem ersten Abstand von der Membran 6 vorliegt, während die nicht axial versetzten Abschnitte des Abscheidegitters 8 in einem zweiten Abstand von der Membran 6 vorliegen, der größer als der erste Abstand ist. Diese Ausführungsform hat den entscheidenden Vorteil, dass das Abscheidegitters 8 mit integrierter Membranstützvorrichtung 2 vermittels eines einzigen Prozesses herstellbar ist (beispielsweise Stanzen und Umformen) und dass der Montageaufwand minimiert wird, da nur ein Montageschritt (Aufschnappen des Abscheidegitters 8) nötig ist. Der Grundkörper 1 hat ferner eine Mehrzahl Abstandshalter 12, welche sich in Axialrichtung nach innen weg erstrecken und auf denen das Abscheidegitter 8 aufliegt, um dieses in dem vorbestimmten zweiten Abstand von der Membran 6 zu halten. Die Abstandshalter 12 sind umfänglich verteilt um die Gasdurchtrittsöffnung 15 angeordnet um das Abscheidegitter 8 möglichst gleichmäßig zu stützen. In einer nicht figurativ gezeigten Ausführungsform können die Abstandshalter auch an dem Abscheidegitter 8 ausgebildet sein und sich in Radialrichtung nach außen erstrecken um auf dem Grundkörper 1 aufzuliegen.

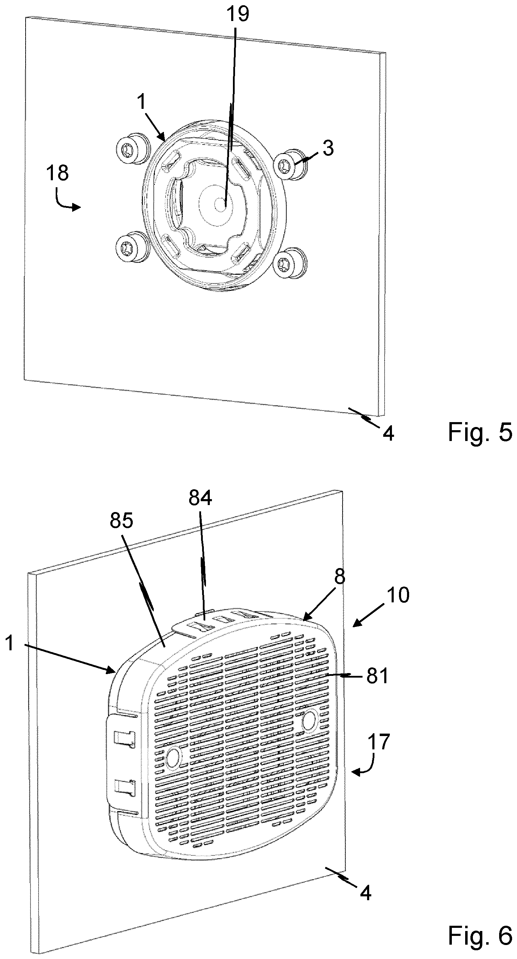

Fig. 5 zeigt die erfindungsgemäße Entgasungseinheit 10 im Montagezustand von außen ohne montierte Abdeckkappe. Hinsichtlich der Verschraubung und Abdichtung entspricht die zweite Ausführungsform der weiter oben beschriebenen ersten Ausführungsform.

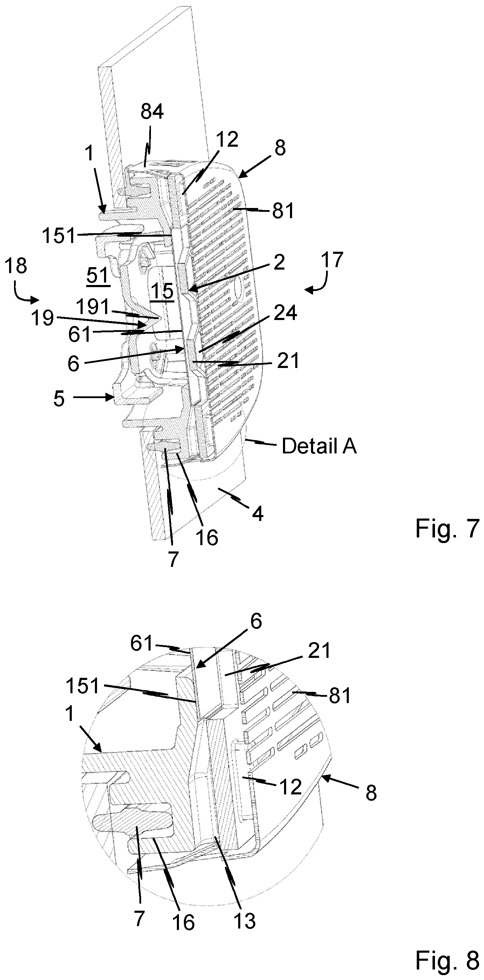

In den **Fig. 6** bis **Fig. 8** ist eine dritte Ausführungsform der erfindungsgemäßen Entgasungseinheit 10 gezeigt. Funktionell entspricht diese den weiter oben beschriebenen ersten und zweiten Ausführungsformen, weshalb nur auf die Unterschiede eingegangen wird. Der Hauptunterschied gegenüber der zweiten Ausführungsform besteht in der separaten Ausführung des Abscheidegitters 8 und der Membranstützvorrichtung 2. Die Membranstützvorrichtung 2 ist als Teil des Grundkörpers 1 ausgebildet bzw. mit diesem stoffschlüssig verbunden, insbesondere verschweißt, und weist eine insbesondere wabenförmige Gitterstegstruktur 21 zwischen denen die Gitteröffnungen 24 vorliegen. Die Form der Gitterstegstruktur 21 kann in nicht figurativ gezeigten Ausführungen auch von der Wabenform abweichen. Die Membranstützvorrichtung 2 ist wiederum in einem ersten Abstand von der Membran 6 angeordnet. Eine mit dem Grundkörper 1 einteilige Ausbildung hat den Vorteil, dass die Membranstützvorrichtung 2 zusammen mit dem Grundkörper 1 hergestellt werden kann (etwa durch Spritzgießen). Die Membranstützvorrichtung 2 kann aus dem gleichen Material bestehen wie der Stützkörper 1 etwa aus einem thermoplastischen Kunststoff, beispielsweise aus Polypropylen, Polybutylenterephthalat oder Polyamid, jeweils Verstärkungsfasern aufweisend, insbesondere Glasfasern und kann daher problemlos mit dem Grundkörper 1 verschweißt werden. Mit dem Grundkörper 1 lösbar verbunden ist das Abscheidegitter 8, welches planar ausgebildet ist (keine Auswölbung bzw. Vertiefung). Bezüglich der Funktion der Abstandshalter 12 und der Befestigung des Abscheidegitters 8 im Umgriffsbereich 85 mit dem Grundkörper 1 wird auf die Ausführungen zur zweiten Ausführungsform verwiesen. In der Fig. 8 ist die lösbare Verbindung des Abscheidegitters 8 mit dem Grundkörper 1 durch die Schnappmittel 84 des Abscheidegitters 8, welche in korrespondierende Schnappausnehmungen 13 des Grundkörpers 1 eingreifen noch als Detail A gezeigt.

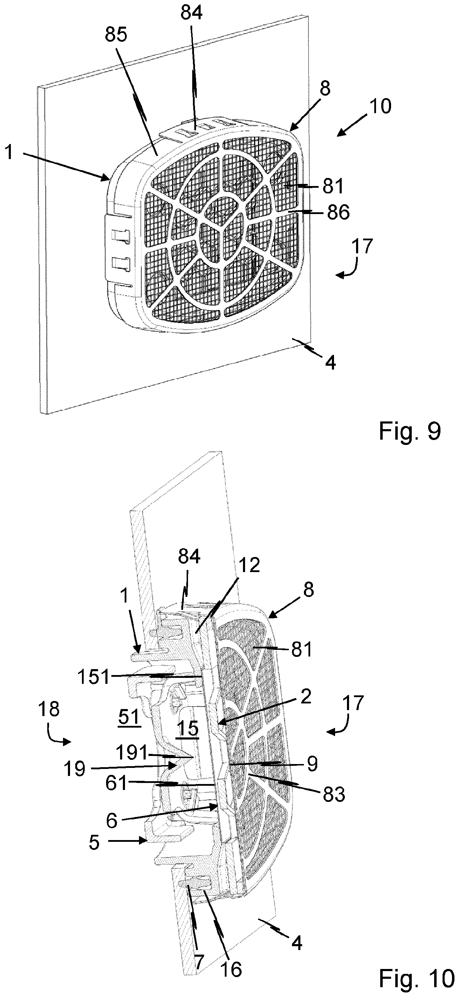

Eine vierte Ausführungsform der erfindungsgemäßen Entgasungseinheit 10 ist in den **Fig. 9** und **Fig. 10** gezeigt. Diese entspricht im Wesentlichen der dritten Ausführungsform unterscheidet sich jedoch in der Ausbildung des Abscheidegitters 8. Das Abscheidegitter 8 trägt mit den Stützgitterstegen 86 ein Filtermedium 9, welches die Öffnungen 81, die in der vierten Ausführungsform deutlich größer sind, abdeckt. Das Filtermedium 9 weist ein Drahtgitter auf, welches den effektiv minimalen Öffnungsquerschnitt definiert. Alternativ oder zusätzlich kann das Filtermedium auch ein Vliesmaterial umfassen, welches insbesondere außenseitig an das Drahtgitter angrenzend vorliegen kann, wobei der effektiv minimale Öffnungsquerschnitt dann von einer Porengröße des Vlieses bestimmt wird. Diese Ausführungsform hat den Vorteil, dass durch den Einsatz eines separaten Filtermediums 9 deutlich kleinere effektive Öffnungsquerschnitte realisiert werden können, sodass auch feinere Partikelfraktionen bzw. ein größerer gravimetrischer Anteil der Gesamtpartikelfraktion abgeschieden werden kann. Das Filtermedium weist bevorzugt ein metallisches Material, etwa Stahl, auf oder besteht daraus, was aufgrund der guten thermischen Beständigkeit vorteilhaft ist. Derartige Drahtgitter und/oder Vliesmedien sind am Markt verfügbar.

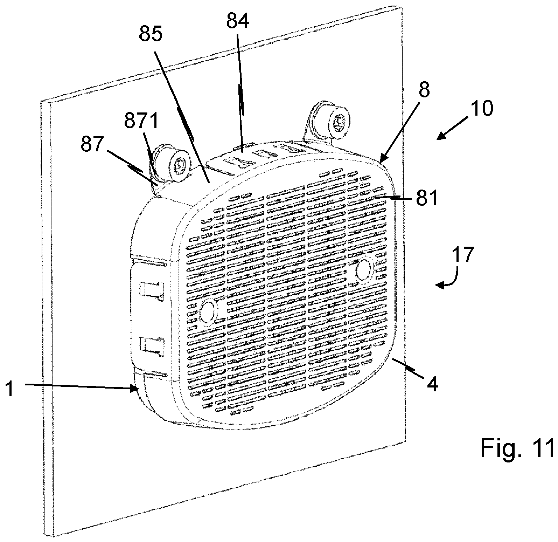

Fig. 11 zeigt eine fünfte Ausführungsform der erfindungsgemäßen Entgasungseinheit 10. Diese entspricht im Wesentlichen der vierten Ausführungsform gemäß den Fig. 9 und Fig. 10. Der Unterschied besteht darin, dass die Entgasungseinheit 10 gemäß der fünften Ausführungsform an ihrem Abscheidegitter 8 eine Befestigungslasche 87 hat, welche sich radial von einem Gitterkörper des Abscheidegitters 8 weg erstreckt. In der Befestigungslasche 87 liegt eine Öffnung 871 vor, durch welche eine metallische Schraube geführt ist, vermittels der das Abscheidegitter8 unmittelbar mit der Wandung 4 des Elektronikgehäuses verbunden ist. Die hiermit verbundenen technischen Vorteile sind im allgemeinen Teil der Beschreibung umfassend gewürdigt.

### Bezugszeichenliste

- 10: Entgasungseinheit
- 1: Grundkörper
- 11: Befestigungsmitteleinwirkungsbereich
- 12: Abstandshalter
- 13: Schnappausnehmungen des Grundkörpers
- 15: Gasdurchtrittsöffnung
- 151: Rand der Gasdurchtrittsöffnung
- 16: Dichtungsaufnahmenut des Grundkörpers
- 17: Innenseite des Grundkörpers
- 18: Außenseite des Grundkörpers
- 19: Notentgasungsdorn
- 191: Spitze des Notentgasungsdorns
- 2: Stützvorrichtung
- 21: Gitterstege
- 24: Gitteröffnungen
- 3: Schraube
- 4: Wandung des Elektronikgehäuses
- 41: Durchgangsbohrung der Wandung des Elektronikgehäuses
- 5: Abdeckhaube
- 51: Be-/Entlüftungsöffnungen
- 6: semipermeable Membran
- 61: Äußere Membranoberfläche
- 7: Gehäusedichtung
- 8: Abscheidegitter
- 81: Öffnungen des Abscheidegitters
- 82: Topfförmige Auswölbung des Abscheidegitters
- 83: Axiale Stützauswölbung des Abscheidegitters
- 84: Schnappmittel des Abscheidegitters
- 85: Umgriffsbereich des Abscheidegitters
- 86: Stützgitterstege des Abscheidegitters
- 87: Befestigungslasche des Abscheidegitters
- 871: Öffnung der Befestigungslasche
- 9: Filtermedium

## Patentansprüche

1. Entgasungseinheit (10) für ein Elektronikgehäuse, insbesondere für eine Batterie, insbesondere für eine Traktionsbatterie eines Kraftfahrzeugs,
- mit einem fluiddicht mit einem Rand einer Druckausgleichsöffnung des Elektronikgehäuses verbindbaren Grundkörper (1), der zumindest eine Gasdurchtrittsöffnung (15) aufweist, die von einer semipermeablen Membran (6) abgedeckt ist, welche einen Durchtritt von gasförmigen Medien von einer Umgebung in das Elektronikgehäuse und umgekehrt ermöglicht, den Durchtritt von flüssigen Medien und/oder Feststoffen jedoch unterbindet,
- und mit einer an einer Innenseite (17) des Grundkörpers (1) angeordneten Membranstützvorrichtung (2), welche die Gasdurchtrittsöffnung (15) zumindest teilweise übergreift und in einem ersten Abstand von der semipermeablen Membran (6) vorliegt,
- wobei der Grundkörper (1) zumindest einen Befestigungsmitteleinwirkungsbereich (11) aufweist, der zu einer Befestigung der Entgasungseinheit (10) mit dem Elektronikgehäuse eingerichtet ist,
wobei an der Innenseite (17) des Grundkörpers (1) in einem zweiten Abstand von der semipermeablen Membran (6) ein Abscheidegitter (8) mit einer Vielzahl Gitteröffnungen (81) angeordnet ist, **dadurch gekennzeichnet, dass** der zweite Abstand größer ist als der erste Abstand und dass bei das Abscheidegitter (8) die Gasdurchtrittsöffnung (15) vollständig übergreift, wobei eine von dem Abscheidegitter (8) überspannte Fläche größer ist als ein Querschnitt der Gasdurchtrittsöffnung (15).

2. Entgasungseinheit (10) nach Anspruch 1, **dadurch gekennzeichnet, dass** die Membranstützvorrichtung (2) fluiddurchlässig ausgebildet ist, bevorzugt als Gitterabschnitt mit einer Vielzahl von Gitteröffnungen (24).

3. Entgasungseinheit (10) nach Anspruch 1 oder 2, **dadurch gekennzeichnet, dass** das Abscheidegitter (8) partikeldicht mit dem Grundkörper (1) verbunden ist.

4. Entgasungseinheit (10) nach einem der Ansprüche 1 bis 3, **dadurch gekennzeichnet, dass** die Abmessungen der Gitteröffnungen (81) des Abscheidegitters (8) in zumindest einer Erstreckungsrichtung kleiner als 2,0 mm, bevorzugt kleiner als 1,2 mm, stärker bevorzugt kleiner als 0,9 mm, sind.

5. Entgasungseinheit (10) nach einem der Ansprüche 1 bis 4, **dadurch gekennzeichnet, dass** die Membran (6) an der Innenseite (17) des Grundkörpers (1) vorliegt und von der Stützvorrichtung (2) zumindest teilweise hintergriffen wird.

6. Entgasungseinheit (10) nach einem der Ansprüche 1 bis 5, **dadurch gekennzeichnet, dass** das Abscheidegitter (8) in einer in einem Montagezustand nach innen weisenden Richtung topfförmig ausgewölbt ist.

7. Entgasungseinheit (10) nach einem der Ansprüche 1 bis 5, **dadurch gekennzeichnet, dass** das Abscheidegitter (8) im Wesentlichen planar ausgebildet ist.

8. Entgasungseinheit (10) nach einem der Ansprüche 1 bis 7, **dadurch gekennzeichnet, dass** die Entgasungseinheit (10) zumindest einen Abstandshalter (12) aufweist, welcher das Abscheidegitter (8) in dem zweiten Abstand von der Membran (6) hält, und der entweder nach axial innen vom Grundkörper (1) abragend oder nach axial außen vom Abscheidegitter (8) abragend ausgebildet ist.

9. Entgasungseinheit (10) nach einem der Ansprüche 2 bis 8, **dadurch gekennzeichnet, dass** die Abmessungen der Gitteröffnungen (24) der Membranstützvorrichtung (2) größer sind als die Abmessungen der Gitteröffnungen (81) des Abscheidegitters (8).

10. Entgasungseinheit (10) nach einem der Ansprüche 1 bis 9, **dadurch gekennzeichnet, dass** das Abscheidegitter (8) und die Membranstützvorrichtung (2) separat voneinander ausgebildet sind.

11. Entgasungseinheit (10) nach einem der Ansprüche 1 bis 9, **dadurch gekennzeichnet, dass** das Abscheidegitter (8) und die Membranstützvorrichtung (2) einteilig ausgebildet sind.

12. Entgasungseinheit (10) nach Anspruch 11, **dadurch gekennzeichnet, dass** die Membranstützvorrichtung (2), insbesondere der Gitterabschnitt der Membranstützvorrichtung (2), als axiale Stützauswölbung (83) des Abscheidegitters (8) ausgebildet ist, wobei die Stützauswölbung (83) bevorzugt zentrisch bezüglich der Gasdurchtrittsöffnung (15) vorliegt.

13. Entgasungseinheit (10) nach einem der Ansprüche 1 bis 12, **dadurch gekennzeichnet, dass** das Abscheidegitter (8) ein Filtermedium (9) trägt, das bevorzugt ein Gittermaterial, insbesondere ein Drahtgitter, und/oder ein Vliesmaterial umfasst, wobei bevorzugt das Filtermedium (9) ein metallisches Material aufweist oder daraus besteht.

14. Entgasungseinheit (10) nach einem der Ansprüche 1 bis 13, **dadurch gekennzeichnet, dass** das Abscheidegitter (8) mit dem Grundkörper (1) unlösbar oder lösbar verbunden ist, insbesondere mit dem Grundkörper (1) verschnappt.

15. Entgasungseinheit (10) nach einem der Ansprüche 1 bis 14, **dadurch gekennzeichnet, dass** ein Abstand zwischen dem Abscheidegitter (8) und der Membranstützvorrichtung (2) im Bereich des Zentrums der Gasdurchtrittsöffnung (15) 0,2 mm, bevorzugt zumindest 0,7 mm, beträgt.

16. Entgasungseinheit (10) nach einem der vorigen Ansprüche, **dadurch gekennzeichnet, dass** das Abscheidegitter (8) als Blechteil, insbesondere gestanztes Blechteil, ausgebildet ist, wobei bevorzugt das Abscheidegitter (8) zumindest eine Durchstecköffnung hat, welche mit der zumindest einen Sacklochbohrung des Grundkörpers (1) fluchtet.

17. Entgasungseinheit (10) nach einem der vorigen Ansprüche, **dadurch gekennzeichnet, dass** das Abscheidegitter (8) zumindest eine Befestigungslasche (87) mit einer Öffnung aufweist, wobei sich die Befestigungslasche (87) bevorzugt radial erstreckt, und wobei die Befestigungslasche (87) dazu geeignet ist, das Abscheidegitter (8) unmittelbar mit einer Wandung (4) des Elektronikgehäuses zu verbinden.

18. Entgasungseinheit (10) nach einem der vorigen Ansprüche, **dadurch gekennzeichnet, dass** die Entgasungseinheit (10) einen Notentgasungsdorn (19) aufweist, der sich außenseitig in Axialrichtung zu der Membran (6) erstreckt und dessen Spitze (191) in einem Ruhezustand in einem vorbestimmten Abstand von einer äußeren Membranoberfläche (61) vorliegt, wobei insbesondere der Notentgasungsdorn (19) an dem Grundkörper (1) oder an der Abdeckhaube (5) ausgebildet ist.

19. Elektronikgehäuse, insbesondere Batteriegehäuse, insbesondere einer Traktionsbatterie eines Kraftfahrzeugs, das zumindest eine Gehäusewandung mit einer Druckausgleichsöffnung aufweist, wobei in dem Elektronikgehäuse bevorzugt Batteriezellen anordenbar sind, wobei die Druckausgleichsöffnung von einer Entgasungseinheit verschlossen ist, **dadurch gekennzeichnet, dass** die Entgasungseinheit eine Entgasungseinheit (10) nach einem der Ansprüche 1 bis 18 ist.

20. Elektronikgehäuse, nach Anspruch 19, **dadurch gekennzeichnet, dass** die Entgasungseinheit (10) mittels zumindest eines Befestigungsmittels (3), insbesondere einer Schraube, mit einer Wandung (4) des Elektronikgehäuses verbunden ist, wobei das Befestigungsmittel (3) mit dem Befestigungsmitteleinwirkungsbereich (11) des Grundkörpers in Eingriff steht, und wobei besonders bevorzugt das Abscheidegitter (8) mittelbar oder unmittelbar kraft- und/oder formschlüssig zwischen der Wandung (4) des Elektronikgehäuses und dem Grundkörper (1) der Entgasungseinheit (10) festgelegt ist.

21. Elektronikgehäuse, nach Anspruch 19 oder 20, **dadurch gekennzeichnet, dass** das Abscheidegitter (8) unmittelbar mit einer Wandung (4) des Elektronikgehäuses verbunden ist, insbesondere durch zumindest ein metallisches Befestigungselement, insbesondere zumindest einer Schraube, die bevorzugt durch die Öffnung (871) der zumindest einen Befestigungslasche (87) des Abscheidegitters (8) geführt ist.

## Claims

1. A degassing unit (10) for an electronics housing, in particular for a battery, in particular for a traction battery of a motor vehicle,
- having a base body (1) connectable in a fluid-tight manner to the edge of a pressure compensation opening of the electronics housing, said base body featuring at least one gas passage opening (15) covered by a semipermeable membrane (6) enabling gaseous media to pass from an environment into the electronics housing and vice versa, but preventing the passage of liquid media and/or solids,
- and having a membrane supporting device (2) disposed on an interior side (17) of the base body (1), said membrane supporting device overlapping the gas passage opening (15) at least partially and being present at a first distance from the semipermeable membrane (6),
- wherein the base body (1) features at least one area of application for an attachment means (11) designed to attach the degassing unit (10) to the electronics housing,
- wherein a separating grid (8) having a plurality of grid openings (81) is disposed on the interior side (17) of the base body (1) at a second distance from the semipermeable membrane (6), **characterized in that** the second distance is larger than the first distance, and that the separating grid (8) completely overlaps the gas passage opening (15), wherein an area covered by the separating grid (8) is larger than a cross section of the gas passage opening (15).

2. The degassing unit (10) according to claim 1, **characterized in that** the membrane supporting device (2) is designed to be fluid-permeable, preferably as a grid section having a plurality of grid openings (24).

3. The degassing unit (10) according to claim 1 or 2, **characterized in that** the separating grid (8) is particle-tight connected to the base body (1).

4. The degassing unit (10) according to one of the claims 1 to 3, **characterized in that** the dimensions of the grid openings (81) of the separating grid (8) are smaller than 2.0 mm, preferably smaller than 1.2 mm, more preferably smaller than 0.9 mm, in at least one extension direction.

5. The degassing unit (10) according to one of the claims 1 to 4, **characterized in that** the membrane (6) is present on the interior side (17) of the base body (1) and is at least partially engaged from behind by the supporting device (2).

6. The degassing unit (10) according to one of the claims 1 to 5, **characterized in that** the separating grid (8), in an assembled state, is bulged out in a pot-shaped manner in a direction pointing towards the inside.

7. The degassing unit (10) according to one of the claims 1 to 5, **characterized in that** the separating grid (8) is designed to be substantially planar.

8. The degassing unit (10) according to one of the claims 1 to 7, **characterized in that** the degassing unit (10) features at least one spacer (12) holding the separating grid (8) at the second distance from the membrane (6) and designed either to project in the axial inside direction from the base body (1) or to project in the axial outside direction from the separating grid (8).

9. The degassing unit (10) according to one of the claims 2 to 8, **characterized in that** the dimensions of the grid openings (24) of the membrane supporting device (2) are larger than the dimensions of the grid openings (81) of the separating grid (8).

10. The degassing unit (10) according to one of the claims 1 to 9, **characterized in that** the separating grid (8) and the membrane supporting device (2) are designed separately from each other.

11. The degassing unit (10) according to one of the claims 1 to 9, **characterized in that** the separating grid (8) and the membrane supporting device (2) are made in one piece.

12. The degassing unit (10) according to claim 11, **characterized in that** the membrane supporting device (2), in particular the grid section of the membrane supporting device (2), is designed as an axial supporting bulge (83) of the separating grid (8), wherein the supporting bulge (83) is preferably present in the center with respect to the gas passage opening (15).

13. The degassing unit (10) according to one of the claims 1 to 12, **characterized in that** the separating grid (8) supports a filter medium (9) preferably comprising a grid material, in particular a wire grid, and/or a non-woven fabric material, wherein preferably the filter medium (9) features a metallic material or consists of such a material.

14. The degassing unit (10) according to one of the claims 1 to 13, **characterized in that** the separating grid (8) is non-detachably or detachably connected to the base body (1), in particular snap-fitted to the base body (1).

15. The degassing unit (10) according to one of the claims 1 to 14, **characterized in that** a distance between the separating grid (8) and the membrane supporting device (2) in the area of the center of the gas passage opening (15) is 0.2 mm, preferably at least 0.7 mm.

16. The degassing unit (10) according to one of the preceding claims, **characterized in that** the separating grid (8) is designed as a sheet metal part, in particular a punched sheet metal part, wherein preferably the separating grid (8) features at least one push-through opening which is aligned with the at least one blind hole bore of the base body (1).

17. The degassing unit (10) according to one of the preceding claims, **characterized in that** the separating grid (8) features at least one fastening tab (87) with an opening, wherein the fastening tab (87) preferably extends radially, and wherein the fastening tab (87) is suitable for connecting the separating grid (8) directly to a wall (4) of the electronics housing.

18. The degassing unit (10) according to one of the preceding claims, **characterized in that** the degassing unit (10) features an emergency degassing mandrel (19) extending on the exterior side in relation to the membrane (6) in the axial direction and the tip (191) of which is present, in a non-operating state, at a predetermined distance from an external membrane surface (61), wherein in particular the emergency degassing mandrel (19) is formed on the base body (1) or on the covering hood (5).

19. An electronics housing, in particular a battery housing, in particular a traction battery of a motor vehicle featuring at least one housing wall with a pressure compensation opening, wherein battery cells can preferably be arranged in the electronics housing, wherein the pressure compensation opening is closed by a degassing unit, **characterized in that** the degassing unit is a degassing unit (10) according to one of the claims 1 to 18.

20. The electronics housing according to claim 19, **characterized in that** the degassing unit (10) is connected to a wall (4) of the electronics housing using at least one fastening device (3), in particular a screw, wherein the fastening device (3) is in engagement with the area of application for an attachment means (11) of the base body, and wherein the separating grid (8) is particularly preferably directly or indirectly secured in a non-positive and/or positive manner between the wall (4) of the electronics housing and the base body (1) of the degassing unit (10).

21. The electronics housing according to claim 19 or 20, **characterized in that** the separating grid (8) is connected directly to a wall (4) of the electronics housing, in particular by at least one metallic fastening element, in particular at least one screw, which is preferably guided through the opening (871) of the at least one fastening tab (87) of the separating grid (8).

## Revendications

1. Unité de dégazage (10) pour un boîtier électronique, notamment pour une batterie, notamment pour une batterie de traction d'un véhicule automobile,
- ayant un corps de base (1) pouvant être relié de manière étanche aux fluides à un bord d'une ouverture d'équilibrage de pression du boîtier électronique et qui présente au moins une ouverture de passage de gaz (15) recouverte par une membrane semi-perméable (6) permettant un passage de milieux gazeux d'un environnement dans le boîtier électronique et inversement, mais empêchant le passage de milieux liquides et/ou de matières solides,
- et ayant un dispositif de support de membrane (2) disposé sur une face intérieure (17) du corps de base (1) et qui chevauche au moins partiellement l'ouverture de passage de gaz (15) et se trouve à une première distance de la membrane semi-perméable (6),
- dans laquelle le corps de base (1) présente au moins une section d'action de moyen de fixation (11) conçue pour une fixation de l'unité de dégazage (10) avec le boîtier électronique,
- dans laquelle une grille de séparation (8) ayant une pluralité d'ouvertures de grille (81) est disposée sur la face intérieure (17) du corps de base (1) à une deuxième distance de la membrane semi-perméable (6), **caractérisée en ce que** la deuxième distance est supérieure à la première distance et **en ce que** la grille de séparation (8) chevauche complètement l'ouverture de passage de gaz (15), une surface chevauchée par la grille de séparation (8) étant supérieure à une section transversale de l'ouverture de passage de gaz (15).

2. Unité de dégazage (10) selon la revendication 1, **caractérisée en ce que** le dispositif de support de membrane (2) est conçu de manière perméable aux fluides, de préférence en tant que section de grille ayant une pluralité d'ouvertures de grille (24).

3. Unité de dégazage (10) selon la revendication 1 ou 2, **caractérisée en ce que** la grille de séparation (8) est reliée de manière étanche aux particules au corps de base (1).

4. Unité de dégazage (10) selon l'une quelconque des revendications 1 à 3, **caractérisée en ce que** les dimensions des ouvertures de grille (81) de la grille de séparation (8) sont inférieures à 2,0 mm, de préférence inférieures à 1,2 mm, plus préférentiellement inférieures à 0,9 mm dans au moins une direction d'extension.

5. Unité de dégazage (10) selon l'une quelconque des revendications 1 à 4, **caractérisée en ce que** la membrane (6) se trouve sur la face intérieure (17) du corps de base (1) et est prise au moins partiellement par l'arrière par le dispositif de support (2).

6. Unité de dégazage (10) selon l'une quelconque des revendications 1 à 5, **caractérisée en ce que** la grille de séparation (8), dans un état monté, est bombée en forme de pot dans une direction dirigée vers l'intérieur.

7. Unité de dégazage (10) selon l'une quelconque des revendications 1 à 5, **caractérisée en ce que** la grille de séparation (8) est réalisée de manière essentiellement plane.

8. Unité de dégazage (10) selon l'une quelconque des revendications 1 à 7, **caractérisée en ce que** l'unité de dégazage (10) présente au moins une entretoise (12) maintenant la grille de séparation (8) à la deuxième distance de la membrane (6) et qui est réalisée soit en saillie axiale vers l'intérieur du corps de base (1), soit en saillie axiale vers l'extérieur de la grille de séparation (8).

9. Unité de dégazage (10) selon l'une quelconque des revendications 2 à 8, **caractérisée en ce que** les dimensions des ouvertures de grille (24) du dispositif de support de membrane (2) sont supérieures aux dimensions des ouvertures de grille (81) de la grille de séparation (8).

10. Unité de dégazage (10) selon l'une quelconque des revendications 1 à 9, **caractérisée en ce que** la grille de séparation (8) et le dispositif de support de membrane (2) sont réalisés séparément l'un de l'autre.

11. Unité de dégazage (10) selon l'une quelconque des revendications 1 à 9, **caractérisée en ce que** la grille de séparation (8) et le dispositif de support de membrane (2) sont réalisés d'un seul tenant.

12. Unité de dégazage (10) selon la revendication 11, **caractérisée en ce que** le dispositif de support de membrane (2), notamment la section de grille du dispositif de support de membrane (2), est réalisé en tant que bombement de support axial (83) de la grille de séparation (8), le bombement de support (83) se trouvant de préférence centré par rapport à l'ouverture de passage de gaz (15).

13. Unité de dégazage (10) selon l'une quelconque des revendications 1 à 12, **caractérisée en ce que** la grille de séparation (8) porte un milieu filtrant (9) comprenant de préférence un matériau grillagé, notamment un grillage métallique, et/ou un matériau non-tissé, de préférence le milieu filtrant (9) présentant ou étant constitué d'un matériau métallique.

14. Unité de dégazage (10) selon l'une quelconque des revendications 1 à 13, **caractérisée en ce que** la grille de séparation (8) est reliée au corps de base (1) de manière inamovible ou amovible, notamment par encliquetage avec le corps de base (1).

15. Unité de dégazage (10) selon l'une quelconque des revendications 1 à 14, **caractérisée en ce qu'**une distance entre la grille de séparation (8) et le dispositif de support de membrane (2) au niveau du centre de l'ouverture de passage de gaz (15) est de 0,2 mm, de préférence d'au moins 0,7 mm.

16. Unité de dégazage (10) selon l'une quelconque des revendications précédentes, **caractérisée en ce que** la grille de séparation (8) est réalisée en tant que pièce de tôle, notamment pièce de tôle estampée, de préférence la grille de séparation (8) présentant au moins une ouverture traversante qui est alignée avec l'au moins un trou borgne du corps de base (1).

17. Unité de dégazage (10) selon l'une quelconque des revendications précédentes, **caractérisée en ce que** la grille de séparation (8) présente au moins une patte de fixation (87) avec une ouverture, la patte de fixation (87) s'étendant de préférence radialement, et la patte de fixation (87) étant apte à relier la grille de séparation (8) directement à une paroi (4) du boîtier électronique.

18. Unité de dégazage (10) selon l'une quelconque des revendications précédentes, **caractérisée en ce que** l'unité de dégazage (10) présente un mandrin de dégazage d'urgence (19) s'étendant extérieurement dans la direction axiale par rapport à la membrane (6) et dont la pointe (191) se trouve, dans un état de repos, à une distance prédéterminée d'une surface de membrane extérieure (61), le mandrin de dégazage d'urgence (19) étant notamment réalisé sur le corps de base (1) ou sur le capot de recouvrement (5).

19. Boîtier électronique, notamment boîtier de batterie, notamment d'une batterie de traction d'un véhicule automobile présentant au moins une paroi de boîtier avec une ouverture d'équilibrage de pression, des cellules de batterie pouvant être disposées de préférence dans le boîtier électronique, l'ouverture d'équilibrage de pression étant fermée par une unité de dégazage, **caractérisé en ce que** l'unité de dégazage est une unité de dégazage (10) selon l'une quelconque des revendications 1 à 18.

20. Boîtier électronique, selon la revendication 19, **caractérisé en ce que** l'unité de dégazage (10) est reliée à une paroi (4) du boîtier électronique par au moins un moyen de fixation (3), notamment une vis, le moyen de fixation (3) étant en prise avec la section d'action de moyen de fixation (11) du corps de base, et, notamment de façon particulièrement préférée, la grille de séparation (8) étant reliée directement ou indirectement par adhérence et/ou par engagement positif entre la paroi (4) du boîtier électronique et le corps de base (1) de l'unité de dégazage (10).

21. Boîtier électronique, selon la revendication 19 ou 20, **caractérisé en ce que** la grille de séparation (8) est reliée directement à une paroi (4) du boîtier électronique, notamment par au moins un élément de fixation métallique, notamment au moins une vis, qui est insérée de préférence à travers l'ouverture (871) de la patte de fixation (87), au moins au nombre d'une, de la grille de séparation (8).
